# FASCICULE DE BREVET EUROPEEN

(11) **EP 2 113 372 B1**
(45) Date de publication et mention de la délivrance du brevet: **14.09.2011**
(21) Numéro de dépôt: 08155443.8
(22) Date de dépôt: 30.04.2008
(51) Int. Cl.: B29C 65/66, F16C 35/063, B29L 31/04

(54) **Pièce-mécanique bi-matière améliorée**
Verbessertes mechanisches Bauteil aus Zweischichtwerkstoff
Improved bi-material mechanical part

(43) Date de publication de la demande: 04.11.2009
(73) Titulaire: Jesa SA, 1752 Villars sur Glane (CH)
(72) Inventeur: Bürgisser, Bruno, 1715 Alterswil (CH); Lütenegger, Martin, 1815 Clarens (CH); Rhême, Christian, 1725 Posieux (CH)
(74) Mandataire: BOVARD AG

(56) Documents cités:
- WO-A-96/37416
- GB-A- 2 078 600
- JP-A- 60 189 431
- US-A- 5 218 256

## Description

### Domaine technique de l'invention

La présente invention se rapporte au domaine technique général des pièces mécaniques bi-matière, et notamment au domaine technique des roulements, du genre roulements à billes ou autres.

La présente invention concerne plus particulièrement des pièces dans lesquelles il convient d'assurer une fixation entre une structure support et un élément rapporté par exemple par injection, extrusion, rotomoulage ou n'importe quel autre procédé de mise en forme d'une matière plastique. L'invention concerne donc notamment des pièces comportant par exemple une partie métallique et une partie en matériau plastique. Ces pièces peuvent être des roulements à billes avec un axe en matériau plastique ou autres pièce similaires comprenant les caractéristiques similaires.

### Description de l'état de la technique

Il est connu de réaliser une pièce mécanique bi-matière comportant au moins deux éléments à base de matériaux constitutifs différents et intimement solidarisés l'un à l'autre par l'intermédiaire de moyens de liaison mécaniques, le premier élément constituant une structure support pour le second élément en matériau thermoplastique.

Ces pièces sont en général fabriquées en deux étapes. La première étape de fabrication comprend l'usinage de la structure support et la seconde étape comprend l'injection du matériau plastique pour former le second élément. Ces étapes sont connues en tant que tel. Evidemment, la formation du second élément en matériau thermoplastique peut également être réalisée en utilisant d'autres procédés connus de mise en forme des matériaux thermoplastiques, notamment l'extrusion ou le rotomoulage.

US5218256 concerne un carter de moteur réalisé d'une résine pour l'usage dans l'équipement électrique monté dans un véhicule. L'invention concerne également un procédé de fabrication de tel carter de moteur. Ce procédé est basé sur moulage par injection d'un matériel résine thermoplastique.

JP60189431 divulgue une solution pour obtenir un produit creux, qui est aussi légère est de bonne qualité. Ce produit est obtenu en unifiant un premier produit semi fabriqué et un deuxième produit semi fabriqué.

WO96/37416 divulgue un procédé de fixation par post-moulage d'une poignée au corps d'un récipient en plastique. Le procédé a recours au rétrécissement thermique du corps du récipient pour pouvoir engager la poignée.

GB2078600 concerne un procédé pour assembler des éléments en plastique fabriqués d'une résine thermoplastique cristalline. Plus précisement l'invention concerne un procédé d'assembler tels éléments par une opération de recuit qui l'utilise différences dans le taux de contraction de moulage pendant l'opération de recuit.

Les pièces connues présentent cependant un certain nombre d'inconvénients. En effet, le matériau thermoplastique utilisé subit un retrait en se refroidissant et en se solidifiant après la seconde étape (c'est-à-dire l'étape d'injection, d'extrusion, de rotomoulage, etc.). Cette dernière est, en règle générale, mise en oeuvre avec un matériau plus ou mois fluide à température élevée. Lors du refroidissement et de la solidification, il se produit un changement géométrique et par conséquent un jeu mécanique entre la structure support et l'élément en matériau plastique. Un jeu de quelques micromètres suffit à altérer la liaison mécanique entre les deux éléments.

### Exposé sommaire de l'invention

L'objet de la présente invention vise donc à pallier les inconvénients précités et à fournir une pièce mécanique bi-matière dont les éléments constitutifs sont intimement solidarisés l'un à l'autre.

Un autre objet de la présente invention vise à fournir une pièce mécanique bi-matière présentant une liaison mécanique entre ses éléments constitutifs, ladite liaison étant améliorée par rapport à ce que l'on connaissait.

Un autre objet de la présente invention vise à fournir une pièce mécanique bi-matière dont le procédé de fabrication reste simple et économique.

Les objets assignés à l'invention sont atteints à l'aide d'une pièce mécanique bi-matière comportant au moins deux éléments à base de matériaux constitutifs différents et intimement solidarisés l'un à l'autre par l'intermédiaire de moyens de liaison mécaniques, le premier élément constituant une structure support pour le second élément en matériau thermoplastique, caractérisée en ce que le premier élément présente une ouverture dans laquelle s'étend une partie interne du second élément, au moins une partie externe dudit second élément coopérant avec le premier élément en dehors de l'ouverture de manière à exercer sur le premier élément des forces mécaniques résultant du retrait du matériau constitutif du second élément après son refroidissement et sa solidification, constituant ainsi au moins en partie les moyens de liaison mécaniques.

Selon un exemple de réalisation conforme à l'invention, le second élément en matériau thermoplastique est rapporté sur la structure support par injection ou par extrusion.

Le matériau constitutif du premier élément comporte par exemple un matériau métallique, céramique ou plastique.

Selon un exemple de réalisation conforme à l'invention, la structure support est une bague dans laquelle est engagée la partie interne du second élément.

Selon un exemple de réalisation conforme à l'invention, la partie externe du second élément constitue au moins un épaulement en appui contre une extrémité longitudinale correspondante de la bague.

Selon un exemple de réalisation conforme à l'invention, une partie annulaire de l'extrémité longitudinale en contact avec l'épaulement est pourvue d'au moins une gorge dans laquelle pénètre une portion du matériau constitutif du second élément avant sa solidification, de manière à épouser la forme de ladite gorge et à exercer après sa solidification des forces radiales sur le premier élément, améliorant ainsi la liaison mécanique entre lesdits éléments.

Selon un exemple de réalisation conforme à l'invention, la gorge est continue et circulaire.

L'extrémité longitudinale présente par exemple une surface de contact rugueuse, du genre moletage. L'adhérence avec le second élément est ainsi améliorée.

Selon un exemple de réalisation conforme à l'invention, chacune des extrémités longitudinales de la bague est pourvue d'au moins une gorge destinée à coopérer avec un épaulement correspondant de la partie externe du second élément, les épaulements délimitant ainsi une rainure de révolution dans laquelle s'étend la bague.

La pièce mécanique bi-matière conforme à l'invention constitue par exemple une bague intérieure de roulement.

Les objets assignés à l'invention sont également atteints à l'aide d'un roulement du genre roulement à billes, comportant une pièce mécanique telle que présentée ci-dessus.

### Brève description des dessins

Les particularités et les avantages de l'invention apparaîtront avec plus de détails dans le cadre de la description qui suit avec un exemple de réalisation donné à titre illustratif et non limitatif en référence aux figures annexées parmi lesquelles :
- la figure 1 est une illustration schématique, partielle et en coupe d'un exemple de réalisation d'une pièce mécanique bi-matière conforme à l'invention ;
- la figure 2 est un agrandissement d'une partie de la figure 1 ;
- et la figure 3 illustre un exemple de réalisation d'un premier élément de la pièce mécanique conforme à l'invention, dans une application se rapportant à un roulement à billes.

### Exposé détaillé des modes de réalisation de l'invention

Les éléments structurellement et fonctionnellement identiques et présents dans des figures distinctes sont affectés d'une seule et même référence.

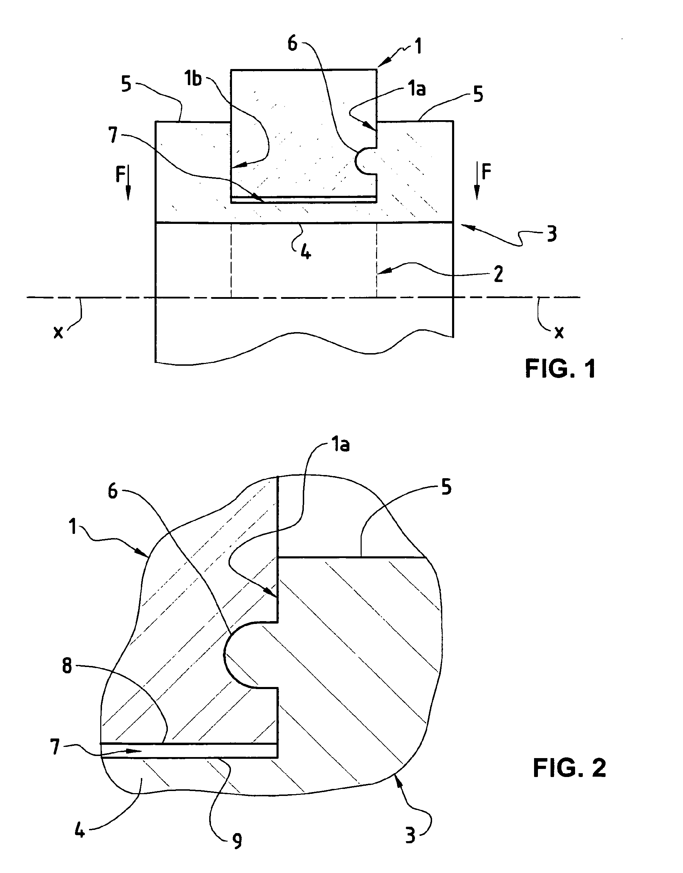

La figure 1 illustre un exemple de réalisation d'une pièce mécanique conforme à l'invention. La pièce mécanique comporte un premier élément 1 présentant une ouverture 2 et un second élément 3.

Le premier élément 1 est par exemple réalisé en matériau métallique, céramique ou dans un autre matériau par exemple plastique.

Le second élément 3, en matériau thermoplastique du genre polymère est rapporté par injection ou extrusion sur le premier élément 1, lequel constitue une structure support.

Le second élément 3 comporte une partie interne 4 s'étendant dans l'ouverture 2 et au moins une partie externe 5 destinée à coopérer avec le premier élément 1.

La structure support du premier élément 1 est par exemple une bague d'axe de symétrie X. L'ouverture 2 présente ainsi une forme cylindrique. La partie interne 4 s'étend alors dans l'ouverture 2.

Le premier élément 1 et le second élément 3 présentent avantageusement des formes géométriques respectives coopérant mécaniquement entre elles pour permettre au second élément 3 d'exercer des forces radiales sur le premier élément 1 grâce au phénomène de retrait. Le second élément 3 peut par exemple recouvrir au moins partiellement le premier élément 1.

Cette coopération mécanique entre le premier élément 1 et le second élément 3 peut également être obtenue par une complémentarité de formes. Dans la suite, il sera mentionné plus particulièrement une forme géométrique du genre gorge 6, mais d'autres formes du genre protubérance convexe ou autre éléments de coopération peuvent être envisagées dans le cadre de l'invention.

La partie externe 5 constitue un épaulement en appui contre une extrémité longitudinale 1 a, 1 b correspondante de la bague.

Selon un exemple de réalisation, une partie annulaire de l'extrémité longitudinale 1 a en contact avec l'épaulement 5 est pourvue d'au moins une gorge 6 dans laquelle pénètre une portion du matériau constitutif du second élément 3 avant sa solidification. Cette portion de matériau épouse la forme de la gorge 6 et permet d'exercer après sa solidification et grâce au retrait, des forces radiales F sur le premier élément 1. Il en résulte une amélioration sensible de la liaison mécanique entre les éléments 1 et 3.

La gorge 6 obtenue par exemple par usinage est de préférence circulaire et continue. Le premier élément 1 peut également présenter une succession de gorges 6, chacune de longueur limitée, et réparties selon une symétrie axiale sur l'extrémité longitudinale 1 a.

L'exemple de réalisation illustré aux figures 1 et 2 montre une bague dont une extrémité longitudinale 1a est pourvue d'au moins une gorge 6 destinée à coopérer avec l'épaulement 5 correspondant. Selon un autre exemple de réalisation, non représenté, la bague est pourvue d'au moins une gorge 6 à chacune de ses extrémités longitudinales 1 a et 1 b.

La gorge 6 présente une forme concave, comme illustrée aux figures 1 ou 2, mais pourrait également être remplacée par des rainures ou évidements, obtenus par tous procédés techniques connus.

Lors du retrait du matériau thermoplastique constitutif du second élément 3, il se forme un écartement 7 entre le premier élément 1 et la partie interne 4 et plus précisément entre une première surface de contact 8 délimitant l'ouverture 2 et une seconde surface de contact 9 de la partie interne 4. Le jeu mécanique qui résulte de cet écartement 7 est alors compensé de manière remarquable par les forces mécaniques F, radiales dans le présent exemple de réalisation, exercées par la ou les parties externes 5 sur le premier élément 1. Ces forces mécaniques F constituent donc des moyens de liaison mécaniques simples et fiables.

Un des avantages de la pièce mécanique conforme à l'invention réside ainsi dans le fait qu'aucun moyen ou organe additionnel n'est nécessaire pour améliorer la cohésion et/ou la rigidité mécanique du sous-ensemble constitué par les éléments 1 et 3.

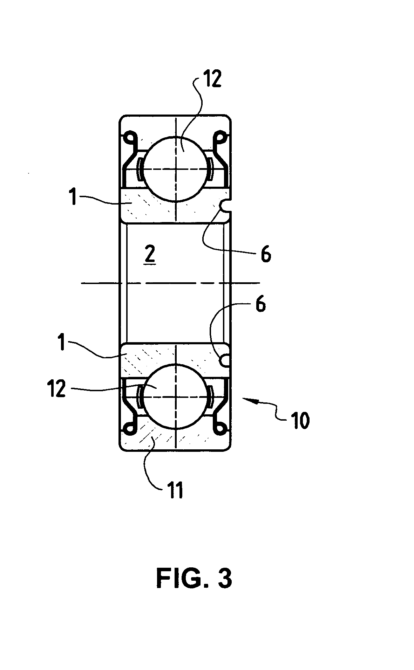

La figure 3 illustre partiellement un exemple de réalisation d'un roulement 10 conforme à l'invention. Le premier élément 1 constitue une bague intérieure séparée d'une bague extérieure 11 notamment grâce à des billes 12. La bague intérieure présente l'ouverture 2 ainsi que la ou les gorges 6. Le second élément 3, en matériau thermoplastique, n'est pas représenté sur cette figure.

D'autres formes ou types de roulements, du genre roulements à rouleaux ou à aiguilles, peuvent également être conçus et réalisés sans sortir du cadre de la présente invention, de la même manière que toute autre pièce destinée à fonctionner comme support au second élément 3.

## Revendications

1. Pièce mécanique bi-matière comportant au moins deux éléments (1,3) à base de matériaux constitutifs différents et intimement solidarisés l'un à l'autre par l'intermédiaire de moyens de liaison mécaniques, le premier élément (1) constituant une structure support pour le second élément (3) en matériau thermoplastique,
**caractérisée en ce que** le premier élément (1) présente une ouverture (2) dans laquelle s'étend une partie interne (4) du second élément (3), au moins une partie externe (5) dudit second élément (3) destinée à coopérer avec le premier élément (1) en dehors de l'ouverture (2) pour exercer sur le premier élément (1) des forces mécaniques F résultant du retrait du matériau constitutif du second élément (31) après son refroidissement et sa solidification, constituant ainsi au moins en partie les moyens de liaison mécaniques.

2. Pièce mécanique selon la revendication 1,
**caractérisée en ce que** le second élément (3) en matériau thermoplastique est rapporté sur la structure support par injection ou par extrusion.

3. Pièce mécanique selon la revendication 1 ou 2,
**caractérisée en ce que** le matériau constitutif du premier élément (1) comporte un matériau métallique, céramique ou plastique.

4. Pièce mécanique selon l'une quelconque des revendications précédentes,
**caractérisée en ce que** la structure support est une bague dans laquelle est engagée la partie interne (4) du second élément (3).

5. Pièce mécanique selon la revendication 4,
**caractérisée en ce que** la partie externe (5) du second élément (3) constitue au moins un épaulement en appui contre une extrémité longitudinale (1 a, 1 b) correspondante de la bague.

6. Pièce mécanique selon la revendication 5,
**caractérisée en ce que** une partie annulaire de l'extrémité longitudinale (1 a, 1 b) en contact avec l'épaulement est pourvue d'au moins une gorge (6) dans laquelle pénètre une portion du matériau constitutif du second élément (3) avant sa solidification, de manière à épouser la forme de ladite gorge (6) et à exercer après sa solidification des forces F radiales sur le premier élément (1), améliorant ainsi la liaison mécanique entre lesdits éléments (1,3).

7. Pièce mécanique selon la revendication 6,
**caractérisée en ce que** la gorge (6) est continue et circulaire.

8. Pièce mécanique selon la revendication 6 ou 7,
**caractérisée en ce que** l'extrémité longitudinale (1 a, 1 b) présente une surface de contact rugueuse, du genre moletage.

9. Pièce mécanique selon la revendication 6 ou 7,
**caractérisée en ce que** chacune des extrémités longitudinales (1a,1b) de la bague est pourvue d'au moins un gorge (6) destinée à coopérer avec un épaulement correspondant de la partie externe (5) du second élément (3), les épaulements délimitant ainsi une rainure de révolution dans laquelle s'étend ladite bague.

10. Pièce mécanique selon l'une quelconque des revendications 1 à 9,
**caractérisée en ce qu'**elle constitue une bague intérieure d'un roulement (10).

11. Roulement (10) du genre roulement à billes comportant une pièce mécanique conforme à l'une quelconque des revendications 1 à 9.

## Claims

1. Bi-material mechanical part comprising at least two elements (1,3) with a base of different constituent materials and closely interlocked, one with respect to the other, using mechanical connection means, the first element (1) constituting a support structure for the second element (3) of thermoplastic material,
**characterised in that** the first element (1) has an opening (2) into which extends an internal part (4) of the second element (3), at least one external part (5) of the said second element (3) being intended to co-operate with the first element (1) outside of the opening (2) to exert on the first element (1) mechanical forces F resulting from the shrinkage of the constituent material of the second element (3), after its refrigeration and its solidification, thus constituting at least part of the mechanical connection means.

2. Mechanical part according to claim 1,
**characterised in that** the second element (3) of thermoplastic material is put on the support structure by injection or by extrusion.

3. Mechanical part according to claim 1 or 2,
**characterised in that** the constituent material of the first element (1) comprises a metallic, ceramic or plastic material.

4. Mechanical part according to any one of the preceding claims, **characterised in that** the support structure is a ring in which the internal part (4) of the second element (3) is engaged.

5. Mechanical part according to claim 4,
**characterised in that** the external part (5) of the second element (3) constitutes at least one shoulder abutting against a corresponding longitudinal end (1 a, 1 b) of the ring.

6. Mechanical part according to claim 5,
**characterised in that** an annular part of the longitudinal end (1a,1b) in contact with the shoulder is provided with at least one recess (6) into which penetrates a portion of the constituent material of the second element (3) before its solidification, in such a way as to take the shape of said recess (6) and to exert after its solidification radial forces F on the first element (1), thus improving the mechanical connection between the said elements (1,3).

7. Mechanical part according to claim 6,
**characterised in that** the recess (6) is continuous and circular.

8. Mechanical part according to claim 6 or 7,
**characterised in that** the longitudinal end (1 a, 1 b) has a rough contact surface, of the knurling type.

9. Mechanical part according to claim 6 or 7,
**characterised in that** each of the longitudinal ends (1 a, 1 b) of the ring is provided with at least one recess (6) intended to co-operate with a corresponding shoulder of the external part (5) of the second element (3), the shoulders thus delimiting a groove of revolution into which the said ring extends.

10. Mechanical part according to any one of the claims 1 to 9,
**characterised in that** it constitutes an inner ring of a bearing (10).

11. Bearing (10) of the ball bearing type comprising a mechanical part according to any one of the claims 1 to 9.

## Patentansprüche

1. Mechanisches Zweimaterienbauteil, umfassend mindestens zwei Elemente (1,3), die aus verschiedenen Baumaterialien aufgebaut und durch mechanische Verbindungsmittel miteinander verbunden sind, wobei das erste Element (1) eine Stützstruktur für das zweite Element (3) aus thermoplastischem Material bildet,
**dadurch gekennzeichnet, dass** das erste Element (1) eine Öffnung (2) aufweist, in welche sich ein innerer Bereich (4) des zweiten Elements (3) ausdehnt, wobei mindestens ein äusserer Bereich (5) des besagten zweiten Elements (3) vorgesehen ist, um mit dem ersten Element (1) ausserhalb der Öffnung (2) zusammenzuwirken, um auf das erste Element (1) mechanische Kräfte F auszuüben, die aus dem Schrumpfen des Baumaterials des zweiten Elements (3) nach seiner Auskühlung und seiner Verfestigung resultieren, wobei somit mindestens ein Teil der mechanischen Verbindungsmittel gebildet wird.

2. Mechanisches Bauteil gemäss Anspruch 1,
**dadurch gekennzeichnet, dass** das zweite Element (3) aus thermoplastischem Material auf die Stützstruktur durchs Spritzen oder durch Extrudieren aufgebracht ist.

3. Mechanisches Bauteil gemäss Anspruch 1 oder 2,
**dadurch gekennzeichnet, dass** das Baumaterial des ersten Elements (1) ein metallisches, keramisches oder Kunststoffmaterial umfasst.

4. Mechanisches Bauteil gemäss einem der vorangehenden Ansprüche,
**dadurch gekennzeichnet, dass** die Stützstruktur ein Ring ist, in welchem der innere Bereich (4) des zweiten Elements (3) eingeführt ist.

5. Mechanisches Bauteil gemäss Anspruch 4,
**dadurch gekennzeichnet, dass** der äussere Bereich (5) des zweiten Elements (3) mindestens eine Schulter bildet, die am entsprechenden Längsende (1 a, 1 b) des Ringes anliegt.

6. Mechanisches Bauteil gemäss Anspruch 5,
**dadurch gekennzeichnet, dass** ein Ringbereich des Längsendes (1 a, 1 b), der mit der Schulter im Kontakt steht, mindestens eine Aussparung (6) umfasst, in welche ein Teil des Baumaterials des zweiten Elements (3) vor der Verfestigung so eindringt, dass es die Form der besagten Aussparung (6) annimmt, und dass es nach seiner Verfestigung Radialkräfte F auf das erste Element (1) ausübt, um so die mechanische Verbindung zwischen den besagten Elementen (1, 3) zu verbessern.

7. Mechanisches Bauteil gemäss Anspruch 6,
**dadurch gekennzeichnet, dass** die Aussparung (6) durchgehend und ringförmig ist.

8. Mechanisches Bauteil gemäss Anspruch 6 oder 7,
**dadurch gekennzeichnet, dass** das Längsende (1 a, 1 b) eine raue Kontaktoberfläche, vom Typ Rändelung, aufweist.

9. Mechanisches Bauteil gemäss Anspruch 6 oder 7,
**dadurch gekennzeichnet, dass** jedes der Längsenden (1 a, 1 b) des Rings mindestens eine Aussparung (6) aufweist, die vorgesehen ist, um mit der entsprechenden Schulter des äusseren Bereichs (5) des zweiten Elements (3) zusammenzuwirken, wobei die Schultern so eine Drehnut begrenzen, in welche sich der besagte Ring ausdehnt.

10. Mechanisches Bauteil gemäss einem der Ansprüche 1 bis 9,
**dadurch gekennzeichnet, dass** es einen Innenring eines Lagers (10) bildet.

11. Lager (10) vom Kugellagertyp, umfassend ein mechanisches Bauteil gemäss einem der Ansprüche 1 bis 9.
